**Europäisches Patentamt**

**European Patent Office**

**Office européen des brevets**

(19)

(11) Veröffentlichungsnummer : **0 334 193 B1**

(12)

# EUROPÄISCHE PATENTSCHRIFT

(45) Veröffentlichungstag der Patentschrift :
27.05.92 Patentblatt 92/22

(51) Int. Cl.⁵ : **H04L 7/02**

(21) Anmeldenummer : **89104630.2**

(22) Anmeldetag : **15.03.89**

(54) **Verfahren und Anordnung zur fortlaufenden Anpassung der Phase eines binären Datensignals an einen Takt.**

(30) Priorität : **22.03.88 DE 3809606 U**

(43) Veröffentlichungstag der Anmeldung :
**27.09.89 Patentblatt 89/39**

(45) Bekanntmachung des Hinweises auf die
Patenterteilung :
**27.05.92 Patentblatt 92/22**

(84) Benannte Vertragsstaaten :
**AT BE CH DE ES FR GB GR IT LI NL SE**

(56) Entgegenhaltungen :
**GB-A- 2 069 263**
**GB-A- 2 143 407**

(73) Patentinhaber : **SIEMENS**
**AKTIENGESELLSCHAFT**
**Wittelsbacherplatz 2**
**W-8000 München 2 (DE)**

(72) Erfinder : **Kollmeier, Manfred, Dipl.-Ing. (FH)**
**Konstanzer Strasse 40**
**W-8000 München 40 (DE)**

**Beschreibung**

Die Erfindung bezieht sich auf ein Verfahren zur fortlaufenden Anpassung der Phase eines ersten binären Datensignals an die eines Taktes, dessen Frequenz der Bitrate dieses ersten Datensignals entspricht.

Innerhalb von Systemen mit einem zentralen Takt ergeben sich bei der Übertragung von binären Datensignalen verschiedene Phasenlagen gegenüber dem zentralen Takt durch deren unterschiedliche Laufzeiten. Während also am Sendeort noch eine feste Phasenbeziehung besteht, ist diese am Empfangsort beliebig. Zusätzlich kann das Datensignal dort eine Verzerrung erfahren haben sowie mit einem Jitter behaftet sein.

Liegt die Phasenverschiebung eines Datensignals zu seinem Takt innerhalb gewisser Bereiche, so kann dieses durch einfaches Abtasten mit seinem Takt phasenrichtig wiedergewonnen werden. Um für alle Datensignale eine geeignete Phasenverschiebung gegenüber dem Takt zu erreichen, müssen entweder definierte Leitungslängen vorhanden sein oder es muß durch individuelles Zwischenschalten von Laufzeitgliedern in den Signalwegen eine Anpassung der Laufzeit durchgeführt werden. Die Grenzen dieses Verfahrens ergeben sich aus den Impulsbreitenverzerrungen des Datensignals sowie der Größe des zu erwartenden Jitters und aus Schwankungen der Laufzeit durch äußere Einflüsse.

Aus der deutschen Offenlegungsschrift DE 31 02 447 A1 ist eine Anordnung zum Synchronisieren der Phase eines örtlichen Taktsignals mit einem Eingangssignal bekannt. Diese Anordnung enthält einen Oszillator mit nachgeschalteter Verzögerungsleitung, aus deren Abgriffen Hilfstakte entnommen werden, die dieselbe Frequenz aufweisen und eine Folge mit gleichen Phasenabständen bilden. Über Schalter kann eine Koinzidenzdetektionsschaltung den Hilfstakt auswählen, dessen steigende Flanke mitten in dem zu detektierenden Bit des Eingangssignals liegt.

Aufgabe der Erfindung ist es, ein Verfahren anzugeben, mit dem das ankommende Datensignal fortlaufend in der Phase an den zentralen Takt angepaßt werden kann. Dieses Verfahren soll weiter mit einer voll integrierten Anordnung durchführbar sein.

Diese Aufgabe wird erfindungsgemäß mit den Merkmalen des Patentanspruchs 1 realisiert.

Eine Anordnung zur Durchführung dieses Verfahrens enthält die Merkmale der Patentansprüche 2 bis 6.

Anhand von Ausführungsbeispielen wird die Erfindung nachstehend näher erläutert.

Fig. 1 zeigt ein erstes Modell zur Erläuterung des Verfahrens,

Fig. 2 zeigt einen ersten Pulsplan zum ersten Modell,

Fig. 3 zeigt einen zweiten Pulsplan zum ersten Modell,

Fig. 4 zeigt ein zweites Modell zur Erläuterung des Verfahrens,

Fig. 5 zeigt ein Blockschaltbild einer Anordnung zur Durchführung des Verfahrens,

Fig. 6 zeigt ein Anordnungsbeispiel detailliert und

Fig. 7 zeigt einen Pulsplan zur Erläuterung der Anordnung nach Fig. 6.

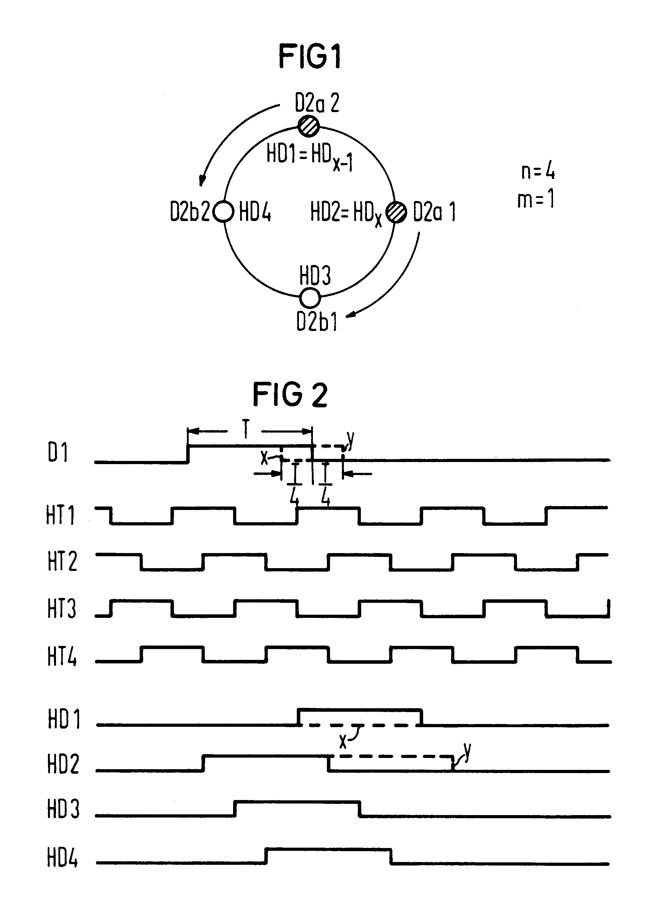

Fig. 1 zeigt ein Modell zur Erläuterung des erfindungsgemäßen Verfahrens für den Fall $m=1$ und $n=4$. Auf einem großen Kreis sind im Phasenabstand von 90° vier kleine Kreise angeordnet, die Hilfsdatensignale HD1 bis HD4 darstellen. Nach einem Zeitpunkt, an dem diese alle einen logischen Zustand "L" (niedrig) aufwiesen, ging zuerst das Hilfsdatensignal HD2 in den logischen Zustand "H" (hoch) über. Es ist deswegen als Hilfsdatensignal $HD_x$ bezeichnet. Dieses und das phasenmäßig vorangehende Hilfsdatensignal $HD_{x-1}$ bzw. HD1 dürfen nicht als neues zweites Datensignal verwendet werden. Die schraffierten kleinen Kreise weisen diese als Teile eines ausgeschlossenen Bereichs aus. Im Falle, daß das Hilfsdatensignal HD2 zuletzt das zweite Datensignal D2a1 war, wird jetzt das Hilfsdatensignal HD3 das neue zweite Datensignal D2b1. War dagegen das Hilfsdatensignal HD1 das zweite Datensignal D2a2, dann wird jetzt das Hilfsdatensignal HD4 als neues zweites Datensignal D2b2 ausgewählt. Es erfolgt demnach jeweils ein Übergang auf das phasenmäßig nächstbenachbarte Hilfsdatensignal. War dagegen zuletzt eines der Hilfsdatensignale HD3 oder HD4 das zweite Datensignal, dann ist kein Wechsel erforderlich.

In jedem neuen Anpassungsintervall können das Hilfsdatensignal $HD_x$ und damit die zwei schraffierten Kreise an anderen Plätzen des großen Kreises liegen.

Fig. 2 zeigt einen Pulsplan zu dem Modell nach Fig. 1. Oben ist das Datensignal D1 und darunter sind die vier Hilfstakte HT1 bis HT4 zu sehen. Wird das Datensignal D1 mit letzteren abgetaktet, so ergeben sich die unten dargestellten Hilfsdatensignale HD1 bis HD4. Ist das Datensignal D1 unverzerrt, so gelten die ausgezogenen Linien. Gestrichelt sind zwei maximale Verzerrungsfälle x und y dargestellt, die Einfluß auf die Hilfsdatensignale HD1 und HD2 haben. Diese dürfen daher nicht als neue Datensignale D2 eingesetzt werden.

Bei Verwendung von vier Hilfstakten HT1 bis HT4 mit Phasendifferenzen von je 90° ergeben sich für das ankommende Datensignal D1 ein maximaler Wert für die zulässige Verzerrung der Bitlänge von 3/4 bis 5/4 der Nominallänge und für den Jitter einen Wert von 0,25 UIpp (Unit Interval peak-peak) im ungünstigsten Fall.

Bei einer Taktperiodendauer T werden bei einer Verwendung der Hilfsdatensignale HD2 oder HD3 demnach in diesem Fall Verzerrungen einer Impulsdauer bis zu $T \pm T/4$ eliminiert. Allgemein gilt $T \pm mT/n$, wobei

m die Anzahl der Bit-n-tel maximaler Verzerrung und n die Anzahl der Hilfsdatensignale bedeuten.

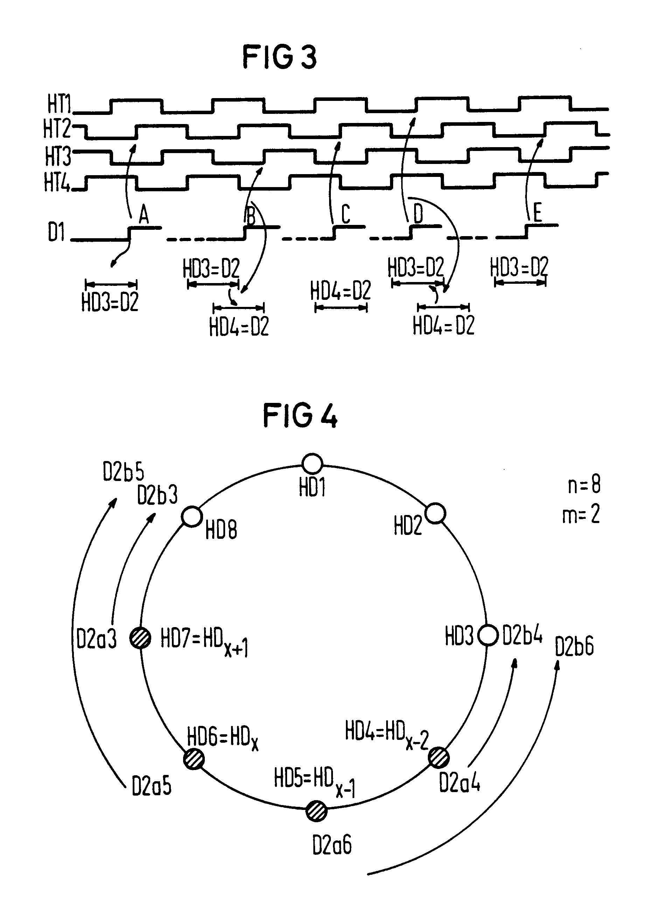

Wie anhand der Fig. 3 näher erläutert wird, dient die Position hier der positiven Flanke des Datensignals D1 in Bezug auf die Hilfstakte HT1 bis HT4 als Auswahlkriterium für die Umschaltung. Ausschlaggebend ist, von welchem Hilfstakt HT1 bis HT4 der Zustandswechsel des Datensignals D1 bei der Abtaktung zuerst erkannt worden ist. Dieser Hilfstakt HT1 bis HT4 liefert das Hilfsdatensignal $HD_x$. Unter den Pulsen der Hilfstakte HT1 bis HT4 sind fünf Zustandswechsel A bis E des Datensignals D1 nach Zeitpunkten, bei denen alle Hilfsdatensignale HD1 bis HD4 einen logischen Zustand "L" aufwiesen, gezeigt. Die von den Zustandswechseln aus nach oben gerichteten Pfeile zeigen an, welcher der Hilfstakte HT1 bis HT4 den Zustandswechsel zuerst erkannt hat und das Hilfsdatensignal HDx liefert. Dies sind für die nacheinander gezeigten Fälle die Hilfstakte HT2, HT3, HT2, HT1 und HT2. Mit Hilfe dieser Informationen wird anschließend entweder das phasenmäßig nächste oder übernächste Hilfsdatensignal als neues zweites Datensignal D2 verwendet, wie es bereits anhand der Fig. 1 beschrieben wurde. Welches dieser beiden ausgewählt wird, hängt von der Vorgeschichte ab, d.h. davon, ob das Hilfsdatensignal $HD_x$ gegenüber dem letzten Anpassungsintervall in der Phase früher oder später erscheint. Dies ist gleichbedeutend mit einer Neuauswahl der Hilfsdatensignale als neues Datensignal D2 aufgrund einer Vergrößerung bzw. Verkleinerung der Datensignallaufzeit des Datensignals D1. Umgeschaltet wird nicht, wenn bereits ein Hilfsdatensignal HD1 bis HD4 außerhalb des ausgeschlossenen Bereichs als Datensignal D2 fungiert.

In Fig. 3 sind unten die Bereiche eingezeichnet, in denen sich das Datensignal D1 bewegen darf, ohne das eine Neuauswahl der Hilfsdatensignale als Datensignal D2 erfolgt. In den Fällen A, C und E ist keine Umschaltung erforderlich; anders in den Fällen B und D und zwar jeweils in anderer Richtung. Die Verschiebung des Bereichs führt dazu, daß bei einem Jitter des Datensignals D1 um eine Phasenlage des Hilfstakts keine weiteren Umschaltungen ausgelöst werden. Ein Jitter des Datensignals D1 darf demnach im ungünstigsten Fall, d.h. wenn die Flanke dieses Datensignal D1 genau zwischen zwei Hilfstakt-Phasenlagen pendelt, nur 0,25 UIpp und im günstigsten Fall, d.h. wenn die Flanke genau um eine Hilfstakt-Phasenlage pendelt, 0,5 UIpp betragen ohne daß eine Umschaltung stattfindet.

Fig. 4 zeigt einen Fall mit m=2 und n=8. Zum ausgeschlossenen Bereich gehören jetzt die Hilfsdatensignale HD4 bis HD7 bzw. $HD_{x-2}$ bis $HD_{x+1}$. War das letzte zweite Datensignal D2 ein im ausgeschlossenen Bereich liegendes wie D2a3, D2a4, D2a5 oder D2a6, dann wird das Hilfsdatensignal HD3 oder HD8 das neue zweite Datensignal D2b3, D2b4, D2b5 oder D2b6.

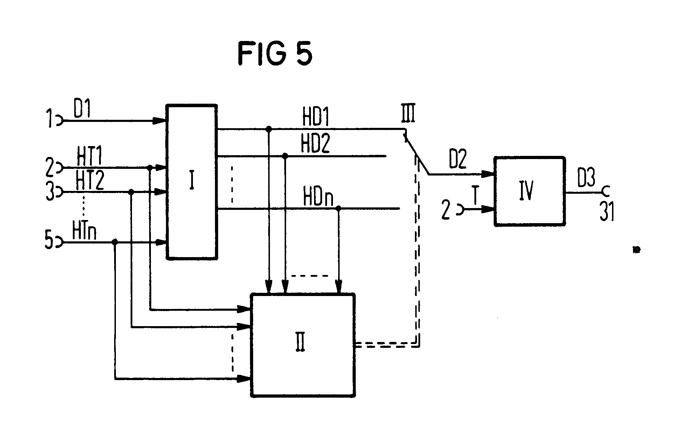

Fig. 5 zeigt eine Anordnung zur Durchführung des erfindungsgemäßen Verfahrens. Sie enthält einen Abtaktteil I, eine Steuerlogik II, einen Umschalter III und einen Anpassungsteil IV. Dem Abtaktteil I werden über einen Eingang 1 das binäre Datensignal D1 und über Eingänge 2, 3 und 5 Hilfstakte HT1 bis HTn zugeführt. Die Frequenz letzterer ist untereinander gleich und entspricht der Bitrate des Datensignals D1. Es läßt sich unter ihnen eine Phase finden, die eine fehlerfreie Abtastung des Datensignals D1 ermöglicht.

Im Abtaktteil I wird das Datensignal D1 zur Bildung von Hilfsdatensignalen HD1 bis HDn von jedem Hilfstakt HTI bis HTn abgetastet. Die Steuerlogik II wählt über den Umschalter III ein geeignetes Hilfsdatensignal aus und führt es dem Anpassungsteil IV als zweites Datensignal D2 zu. In diesem findet die Anpassung des ausgewählten zweiten Datensignals D2 an die Phase des Taktes T statt. Dieser ist beispielsweise einer der Hilfstakte HT1 bis HTn.

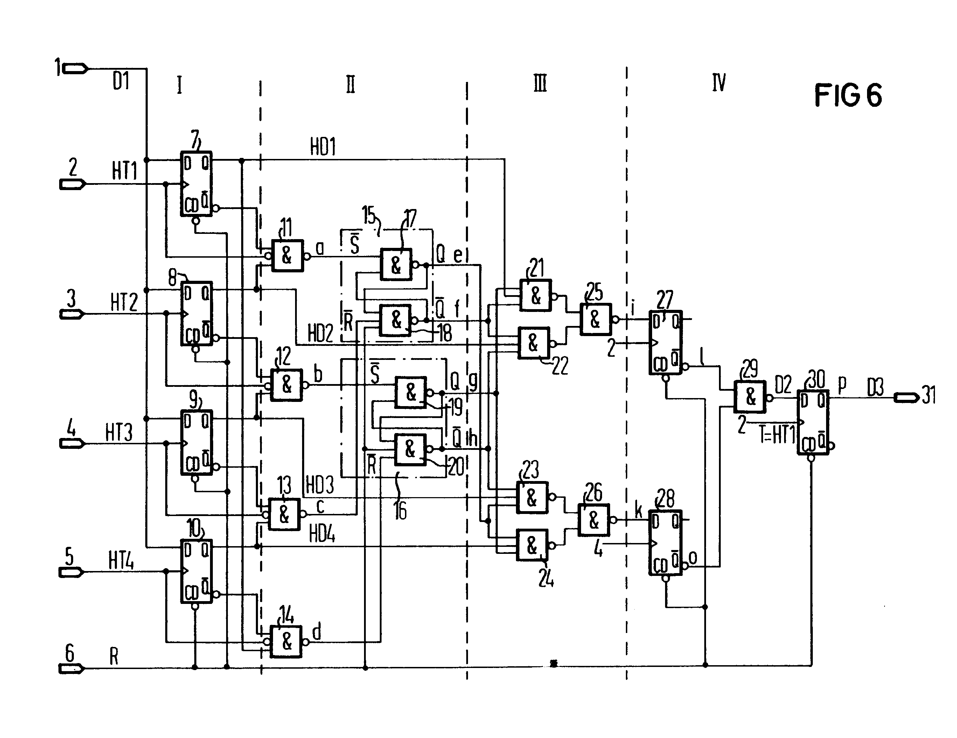

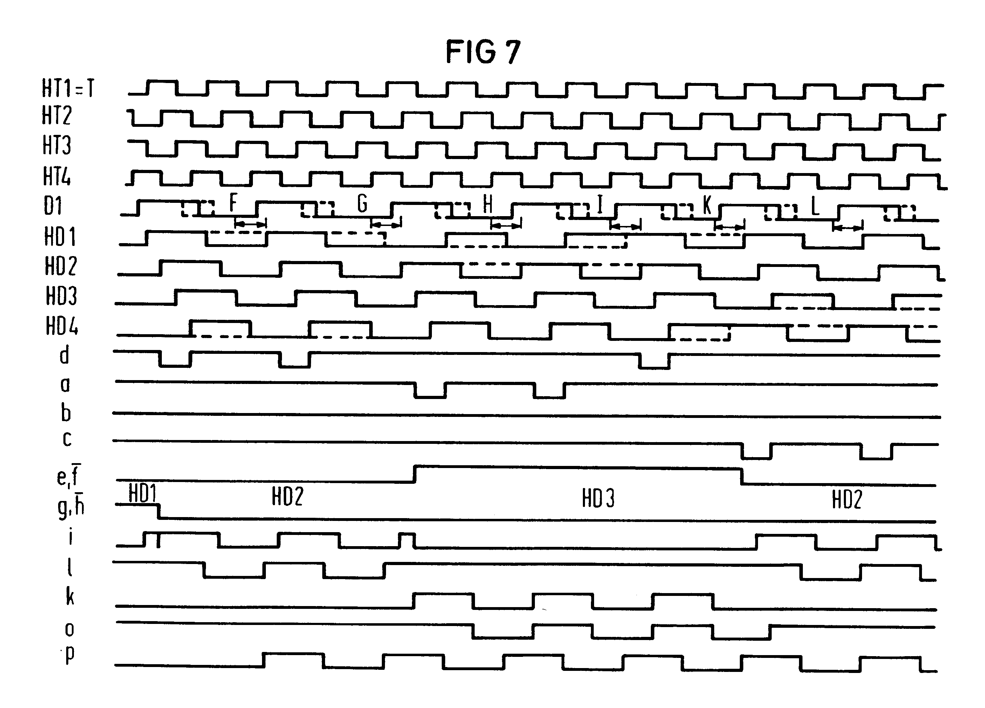

Fig. 6 zeigt ein Ausführungsbeispiel der Anordnung nach Fig. 5, die einen Abtaktteil I, eine Steuerlogik II, einen Umschalter III und einen Anpassungsteil IV enthält, und Fig. 7 einen zugehörigen Pulsplan.

Der Abtastteil I enthält vier D-Flipflops 7 bis 10. Die Steuerlogik II umfaßt vier NAND-Gatter 11 bis 14 und zwei RS-Flipflops 15 und 16. Letztere bestehen aus NAND-Gattern 17 und 18 bzw. 19 und 20. Der Umschalter III besteht aus NAND-Gatter 21 bis 26. Der Anpassungsteil IV enthält D-Flipflops 27, 28 und 30 sowie ein NAND-Gatter 29.

Das binäre Datensignal D1 am Datensignaleingang 1 wird allen D-Eingängen der D-Flipflops 7 bis 10 zugeführt. Der Takteingang des D-Flipflops 7 wird mit dem Hilfstakteingang 2 für den Hilfstakt HT1 verbunden, der Takteingang des D-Flipflops 8 wird an den Hilfstakteingang 3 für den Hilfstakt HT2 angeschlossen, der Takteingang des D-Flipflops 9 ist mit dem Hilfstakteingang 4 für den Hilfstakt HT3 verdrahtet und der Takteingang des D-Flipflops 10 ist mit den Hilfstakteingang 5 für den Hilfstakt HT4 verbunden. Die Rücksetzeingänge aller D-Flipflops 7 bis 10 sind an den Rücksetzsignal-Eingang 6 für das Rücksetzsignal R angeschlossen. In den D-Flipflops 7 bis 10 wird das Datensignal D1 mit positiven Flanken der Hilfstakte HTI bis HT4 abgetaktet. An den Q-Ausgängen der D-Flipflops 7 bis 10 entstehen dabei Hilfsdatensignale HD1 bis HD4, die dem Umschalter III zugeführt werden.

Die Steuerlogik II wertet die Position der positiven Flanke des Datensignals D1 gegenüber den vier Hilfstakten HT1 bis HT4 aus. Mit Hilfe des NAND-Gatters 11 wird am $\overline{S}$-Eingang des RS-Flipflops 15 ein negativer Impuls erzeugt, wenn der Q-Ausgang des D-Flipflops 8 vor den Q-Ausgängen der D-Flipflops 7, 9 und 10 vom logischen Zustand "L" auf den logischen Zustand "H" wechselt und somit die positive Flanke des Datensignals D1 zwischen der ersten und zweiten Hilfstaktphase liegt. Entsprechendes gilt für die Ausgangssignale der NAND-Gatter 12, 13 und 14. Die Ausgangssignale der NAND-Gatter 11 bis 14 werden auf die $\overline{R}$- und $\overline{S}$-Eingänge der RS-Flipflops 15 und 16 geführt. Dabei werden diese immer mit dem phasenmäßig übernächsten Ausgangssignal der NAND-Gatter 11 bis 14 angesteuert. Die Ausgangssignale der RS-Flipflops 15 und 16 entscheiden, welches der Hilfsdatensignale HD1 bis HD4 vom Umschalter III ausgewählt wird.

Als Takt T dient der Hilfstakt HT1. Um auch bei hohen Taktfrequenzen eine geeignete Phasenbeziehung zu diesem Takt T unabhängig von den Gatterlaufzeiten der Steuerlogik II und des Umschalters III zu erreichen, werden die auswählbaren Hilfsdatensignale HD1 bis HD4 in zwei Gruppen aufgeteilt und nochmals mit den D-Flipflops 27 und 28 abgetastet. Im NAND-Gatter 29 erfolgt anschließend eine Zusammenfassung beider aus der Abtaktung gewonnenen Signale zum Datensignal D2 und im D-Flipflop 30 eine Anpassung an den Takt T. Am Ausgang 31 ist das angepaßte und entzerrte Datensignal D3 zu entnehmen. Mit dem Rücksetzsignal R läßt sich ein definierter Anfangszustand erzwingen.

Fig. 7 zeigt den Pulsplan zur Anordnung nach Fig. 6. Oben sind die vier Hilfstakte HT1 bis HT4 dargestellt. Der Hilfstakt HT1 dient als Takt T. Darunter ist das Datensignal D1 mit verzerrten Impulsen dargestellt. In den Fällen F, H und L liegt eine nominelle Laufzeit zwischen den Bits vor. Im Fall G ist die Laufzeit um T/4 größer, in den Fällen I und K um T/4 kleiner. Die Doppelpfeile zeigen die Zuordnung des Bereichs gemäß Fig. 3 an. Anschließend nach unten sind die Hilfsdatensignale HD1 bis HD4 dargestellt. Weiter folgen Pulse von Meßpunkten, die in Fig. 6 mit Kleinbuchstaben markiert sind. Die Bezugszeichen HD1, HD2 und HD3 längs der Pulse zeigen, welches Hilfsdatensignal jeweils ausgewählt ist.

**Patentansprüche**

1. Verfahren zur fortlaufenden Anpassung der Phase eines ersten binären Datensignals (D1) an die eines Taktes (T), dessen Frequenz der Bitrate dieses ersten Datensignals (D1) entspricht,
**dadurch gekenzeichnet,**
daß n Hilfstakte (HT1 bis HTn) erzeugt werden, die dieselbe Frequenz wie der Takt (T) aufweisen und eine Folge mit Phasenabständen 360°/n bilden (n > 2),
daß aus dem ersten Datensignal (D1) über eine Abtastung mit einer ausgewählten Flanke der Hilfstakte (HT1 bis HTn) n Hilfsdatensignale (HD1 bis HDn) abgeleitet werden, von denen eines als ein zweites Datensignal (D2a) dient,
daß jeder Zeitpunkt (t1), bei dem alle Hilfsdatensignale (HD1 bis HDn) entweder einen logischen Zustand "L" oder einen logischen Zustand "H" aufweisen, ein Anpassungsinterval einleitet, daß jeweils festgestellt wird, welches Hilfsdatensignal zu diesem Zeitpunkt (t1) das zweite Datensignal (D2a) ist, daß jeweils ermittelt wird, welches Hilfsdatensignal ($HD_x$) nach diesem Zeitpunkt (t1) zuerst in den logischen Zustand "H" übergeht,
daß das letztgenannte Hilfsdatensignal ($HD_x$), m in der Phase unmittelbar vor diesem Hilfsdatensignal ($HD_x$) liegende Hilfsdatensignale und m-1 in der Phase unmittelbar nach diesem Hilfsdatensignal ($HD_x$) liegende Hilfsdatensignale von der Auswahl eines neuen zweiten Datensignals (D2b) ausgeschlossen werden ($m \leqq \frac{n-1}{2}$),
daß bei Einleitung des Verfahrens ein beliebiges nicht ausgeschlossenes Hilfsdatensignal als zweites Datensignal (D2b) ausgewählt wird,
daß während eines Anpassungsintervalls kein neues zweites Datensignal (D2b) ausgewählt wird, wenn das bisherige (D2a) eines der nicht ausgeschlossenen Hilfsdatensignale ist,
daß während eines Anpassungsintervalls ein in der Phase dem bisherigen zweiten Datensignal (D2a) nächstbenachbartes nicht ausgeschlossenes Hilfsdatensignal als neues zweites Datensignal (D2b) ausgewählt wird, wenn das bisherige eines der ausgeschlossenen Hilfsdatensignale ist, und
daß zur Bildung eines dritten Datensignals (D3) das neue zweite Datensignal (D2b) an den beliebig aus den Hilfstakten (HT1 bis HT4) ausgewählten Takt (T) angepaßt wird.

2. Anordnung zur fortlaufenden Anpassung der Phase eines ersten binären Datensignals (D1) an die eines Taktes (T), dessen Frequenz der Bitrate dieses ersten Digitalsignals (D1) entspricht, mit einem Hilfstaktgenerator, der n Hilfstakte (HT1 bis HTn) erzeugt, die dieselbe Frequenz wie der Takt (T) aufweisen und eine Folge mit Phasenabständen 360°/n bilden (n > 2),
**dadurch gekennzeichnet,**
daß ein Abtaktteil (I) vorgesehen ist, in dem Hilfsdatensignale (HD1 bis HD4) über eine Abtaktung des ersten Datensignals (D1) mit den Hilfstakten (HT1 bis HT4) gewonnen werden,
daß ein Umschalter (III) vorgesehen ist, der eines der Hilfsdatensignale (HD1 bis HD4) als zweites Datensignal (D2) durchschaltet,
daß eine Steuerlogik (II) vorgesehen ist, die eines der Hilfsdatensignale (HD1 bis HD4) als zweites Datensignal (D2) auswählt und den Umschalter (III) entsprechend einstellt, und daß ein Anpassungsteil (IV) vorgesehen ist, in dem aus dem zweiten Datensignal (D2) durch Abtaktung mit dem Takt (T) ein drittes, in der Phase angepaßtes Datensignal (D3) gewonnen wird.

3. Anordnung nach Anspruch 2 für m=1 und n=4,

**dadurch gekenzeichnet,**

daß als Abtaktteil (I) ein erstes (7), zweites (8), drittes (9) und viertes (10) D-Flipflop vorgesehen sind, in denen das erste Datensignal (D1) von jeweils einem Hilfstakt (HT1 bis HT4) gleicher Ordnungszahl abgetaktet wird.

4. Anordnung nach den Ansprüchen 2 und 3 für m=1 und n=4,

**dadurch gekenzeichnet,**

daß als Steuerlogik (II)
ein erstes (11), zweites (12), drittes (13) und viertes (14) NAND-Gatter, bei denen jeweils ein erster Eingang mit dem $\overline{Q}$-Ausgang des D-Flipflops (7 bis 10) gleicher Ordnungszahl, jeweils ein zweiter invertierender Eingang mit einem Hilfstakt-Eingang (2 bis 5) gleicher Ordnungszahl und jeweils ein dritter Eingang mit dem Q-Ausgang des D-Flipflops (7 bis 10) der zyklisch nächsten Ordnungszahl verbunden sind, ein erstes RS-Flipflop (15), dessen $\overline{S}$-Eingang mit dem Ausgang des ersten NAND-Gatters (11), dessen $\overline{R}$-Eingang mit dem Ausgang des dritten NAND-Gatters (13) und dessen Rücksetzeingang mit einem Rücksetzsignal-Eingang (6) verbunden sind, und ein zweites RS-Flipflop (16) vorgesehen sind, dessen $\overline{S}$-Eingang mit dem Ausgang des zweiten NAND-Gatters (13), dessen $\overline{R}$-Eingang mit dem Ausgang des vierten NAND-Gatters (14) und dessen Rücksetzeingang mit dem Rücksetzsignal-Eingang (6) verbunden sind.

5. Anordnung nach den Ansprüchen 2 bis 4 für m=1 und n=4,

**dadurch gekenzeichnet,**

daß als Umschalter (III)
eine erste Gatteranordnung, bestehend aus einem fünften NAND-Gatter (21), dessen erster Eingang mit dem Q-Ausgang des zweiten RS-Flipflops (16), dessen zweiter Eingang mit dem Q-Ausgang des ersten D-Flipflops (7) und dessen dritter Eingang mit dem $\overline{Q}$-Ausgang des ersten RS-Flipflops (15) verbunden sind, aus einem sechsten NAND-Gatter (22), dessen erster Eingang mit dem $\overline{Q}$-Ausgang des ersten RS-Flipflops (15), dessen zweiter Eingang mit dem Q-Ausgang des zweiten D-Flipflops (8) und dessen dritter Eingang mit dem $\overline{Q}$-Ausgang des zweiten RS-Flipflops (16) verbunden sind, und aus einem siebenten NAND-Gatter (25), dessen erster Eingang mit dem Ausgang des fünften NAND-Gatters (21) und dessen zweiter Eingang mit dem Ausgang des sechsten NAND-Gatters (22) verbunden sind, und eine zweite Gatteranordnung vorgesehen sind, bestehend aus einem achten NAND-Gatter (23), dessen erster Eingang mit dem $\overline{Q}$-Ausgang des zweiten RS-Flipflops (16), dessen zweiter Eingang mit dem Q-Ausgang des dritten D-Flipflops (9) und dessen dritter Eingang mit dem Q-Ausgang des ersten RS-Flipflops (15) verbunden sind, aus einem neunten NAND-Gatter (24), dessen erster Eingang mit dem Q-Ausgang des ersten RS-Flipflops (15), dessen zweiter Eingang mit dem Q-Ausgang des vierten D-Flipflops (10) und dessen dritter Eingang mit dem Q-Ausgang des zweiten RS-Flipflops (16) verbunden sind, und mit einem zehnten NAND-Gatter (26), dessen erster Eingang mit dem Ausgang des achten NAND-Gatters (23) und dessen zweiter Eingang mit dem Ausgang des neunten NAND-Gatters (24) verbunden sind.

6. Anordnung nach den Ansprüchen 2 bis 5 für m=1 und n=4,

**dadurch gekennzeichnet,**

daß als Anpassungsteil (IV) ein fünftes D-Flipflop (27), dessen D-Eingang mit dem Ausgang des siebenten NAND-Gatters (25), dessen Takteingang mit dem ersten Hilfstakt-Eingang (2) und dessen Rücksetzeingang mit dem Rücksetzsignal-Eingang (6) verbunden sind, ein sechstes D-Flipflop (28), dessen D-Eingang mit dem Ausgang des zehnten NAND-Gatters (26), dessen Takteingang mit dem dritten Hilfstakt-Eingang (4) und dessen Rücksetzeingang mit dem Rücksetzsignal-Eingang (6) verbunden sind, ein elftes NAND-Gatter (29) dessen erster Eingang mit dem $\overline{Q}$-Ausgang des fünften D-Flipflops (27) und dessen zweiter Eingang mit $\overline{Q}$-Ausgang des sechsten D-Flipflops (28) verbunden sind, und ein siebentes D-Flipflop 30 vorgesehen sind, dessen D-Eingang mit dem Ausgang des elften NAND-Gatters (29), dessen Takteingang mit dem ersten Hilfstakt-Eingang (2), dessen Rücksetzeingang mit dem Rücksetzsignal-Eingang (6) und dessen Q-Ausgang mit einem Ausgang (31) für das dritte Datensignal (D3) verbunden sind.

## Claims

1. Method for continuously adjusting the phase of a first binary data signal (D1) to that of a clock (T), the frequency of which corresponds to the bit rate of this first data signal (D1),
characterised in that
n auxiliary clocks (HT1 to HTn) are generated which have the same frequency as the clock (T) and form a sequence which has intervals of 360°/n (n > 2),
and in that from the first data signal (D1), n auxiliary data signals (HD1 to HDn), one of which is used as a second data signal (D2a), are derived by sampling with a selected edge of the auxiliary clocks (HT1 to HTn), and in that each time (t1), at which all auxiliary data signals (HD1 to HDn) have either a logic state "L" or a logic state "H", initiates an adjustment interval, in that it is in each case determined which auxiliary data signal is the second data signal (D2a) at this time (t1), and in that it is in each case determined which auxiliary data signal (HD$_x$) first changes to the logic state "H" after this time (t1),
and in that the last-mentioned auxiliary data signal (HD$_x$), m auxiliary data signals which immediately precede this auxiliary data signal (HD$_x$) in phase and m-1 auxiliary data signals immediately following this auxiliary data signal (HD$_x$) in phase are excluded from the selection of a new second data signal (D2b) (m $\leq \dfrac{n-1}{2}$),

and in that an arbitrary non-excluded auxiliary data signal is selected as second data signal (D2b) on initiation of the method,
and in that no new second data signal (D2b) is selected during an adjustment interval if the previous signal (D2a) is one of the non-excluded auxiliary data signals,
and in that during an adjustment interval, a non-excluded auxiliary data signal most closely adjacent to the previous second data signal (D2a) in phase is selected as new second data signal (D2b) if the previous one is one of the excluded auxiliary data signals, and in that the new second data signal (D2b) is adjusted to the clock (T) arbitrarily selected from the auxiliary clocks (HT1 to HT4) for forming a third data signal (D3).

2. Arrangement for continuously adjusting the phase of a first primary data signal (D1) to that of a clock (T) the frequency of which corresponds to the bit rate of this first digital signal (D1), comprising an auxiliary clock generator which generates n auxiliary clocks (HT1 to HTn) which have the same frequency as the clock (T) and form a sequence with phase intervals of 360°/n (n > 2),
characterised in that
a clocking-down section (I) is provided in which auxiliary data signals (HD1 to HD4) are obtained by clocking the first data signal (D1) down with the auxiliary clocks (HT1 to HT4), and in that a change-over switch (III) is provided which switches through one of the auxiliary data signals (HD1 to HD4) as second data signal (D2), and in that a control logic (II) is provided which selects one of the auxiliary data signals (HD1 to HD4) as second data signal (D2) and appropriately sets the change-over switch (III), and in that an adjustment section (IV) is provided in which from the second data signal (D2), a third phase-adjusted data signal (D3) is obtained by clocking-down with the clock (T).

3. Arrangement according to Claim 2 for m=1 and n=4,
characterised in that
a first (7), second (8), third (9) and fourth (10) D-type flip flop are provided as clocking-down section (I), in which the first data signal (D1) is clocked down by in each case one auxiliary clock (HT1 to HT4) of the same ordinal number,

4. Arrangement according to Claims 2 and 3 for m=1 and n=4,
characterised in that
a first (11), second (12), third (13) and fourth (14) NAND gate, in which in each case a first input is connected to the $\overline{Q}$ output of the of the D-type flip flop (7) of the same ordinal number, in each case a second inverting input is connected to an auxiliary clock input (2 to 5) of the same ordinal number and in each case a third input is connected to the Q output of the D-type flip flop (7 to 10) of the cyclically next ordinal number, a first RS-type flip flop (15), the $\overline{S}$ input of which is connected to the output of the first NAND gate (11), the $\overline{R}$ input of which is connected to the output of the third NAND gate (13) and the reset input of which is connected to a reset signal input (6), and a second RS-type flip flop (16), the $\overline{S}$ input of which is connected to the output of the second NAND gate (13), the $\overline{R}$ input of which is connected to the output of the fourth NAND gate (14) and the reset input of which is connected to the resit signal input (6), are provided as control logic (II).

5. Arrangement according to Claims 2 to 4 for m=1 and n=4,
characterised in that
a first gate arrangement consisting of a fifth NAND gate (21), the first input of which is connected to the Q output of the second RS-type flip flop (16), the second input of which is connected to the Q output of the first D-type flip flop (7), and the third input of which is connected to the $\overline{Q}$ output of the first RS-type flip flop (15), of a sixth NAND gate (22), the first input of which is connected to the $\overline{Q}$ output of the first RS-type flip flop (15), the second input of which is connected to the Q output of the second D-type flip flop (8), and the third input of which is connected to the $\overline{Q}$ output of the second RS-type flip flop (16), and of a seventh NAND gate (25), the first input of which is connected to the output of the fifth NAND gate (21) and the second input of which is connected to the output of the sixth NAND gate (22), and a second gate arrangement consisting of an eighth NAND gate (23), the first input of which is connected to the $\overline{Q}$ output of the second RS-type flip flop (16), the second input of which is connected to the Q output of the third D-type flip flop (9) and the third input of which is connected to the Q output of the first RS-type flip flop (15), of a ninth NAND gate (24), the first input of which is connected to the Q output of the first RS-type flip flop (15), the second input of which is connected to the Q output of the fourth D-type flip flop (10) and the third input of which is connected to the Q output of the second RS-type flip flop (16), and with a tenth NAND gate (26), the first input of which is connected to the output of the eighth NAND gate (23) and the second input of which is connected to the output of the ninth NAND gate (24), are provided as change-over switch (III).

6. Arrangement according to Claims 2 to 5 for m=1 and n=4,
characterised in that
a fifth D-type flip flop (27), the D input of which is connected to the output of the seventh NAND gate (25), the clock input of which is connected to the first auxiliary clock input (2), and the reset input of which is connected to the reset signal input (6), a sixth D-type flip flop (28), the D input of which is connected to the output of the tenth NAND gate (26), the clock input of which is connected to the third auxiliary clock input (4), and the reset input of which is connected to the reset signal input (6), an eleventh NAND gate (29), the first input of which is connected to the $\overline{Q}$ output of the fifth D-type flip flop (27) and the second input of which is connected to the $\overline{Q}$ output of the sixth D-type flip flop (28), and a seventh D-type flip flop (30), the D input of which is connected to the output of the eleventh NAND gate (29), the clock input of which is connected to the first auxiliary clock input (2), the reset input of which is connected to the reset signal input (6) and the Q output of which is connected to an output (31) for the third data signal (D3), are provided as adjustment section (IV).

**Revendications**

1. Procédé pour adapter continûment la phase d'un premier signal binaire de données (D1) à celle d'une cadence (T), dont la fréquence correspond à la cadence binaire de ce premier signal de données (D1), caractérisé par le fait
qu'on produit n cadences auxiliaires (HT1 à HTn), qui possèdent la même fréquence que la cadence (T) et forment une suite avec des intervalles de phase égaux à 360°/n (n > 2),
qu'à partir du premier signal de données (D1), on obtient, au moyen d'un échantillonnage avec un flanc sélectionné des cadences auxiliaires (HT1 à HTn), n signaux auxiliaires de données (HD1 à HDn), dont l'un est utilisé en tant que second signal de données (D2a),
qu'à chaque instant (t1), auquel tous les signaux auxiliaires de données (HD1 à HDn) possèdent soit un état logique "L", soit un état logique "H", est déclenché un intervalle d'adaptation,
qu'on détermine quel signal auxiliaire de données est à cet instant (t1) le second signal de données (D2a),
qu'on détermine quel signal auxiliaire de données (HD$_x$) passe tout d'abord, après cet instant (t1), à l'état logique "H", que le signal auxiliaire de données (HD$_x$), indiqué en dernier lieu, m signaux auxiliaires de données situés dans la phase précédant directement ce signal auxiliaire de données (HD$_x$) et m-1 signaux auxiliaires de données situés dans la phase succédant directement à ce signal auxiliaire de données (HD$_x$), sont exclus de la sélection d'un nouveau second signal de données (D2b) (m $\leq \dfrac{n-1}{2}$), que lors du déclenchement du procédé, un signal auxiliaire quelconque de données, non exclu, est sélectionné en tant que second signal de données (D2b),
que pendant un intervalle d'adaptation, aucun nouveau second signal de données (D2b) n'est sélectionné, lorsque le signal de données jusqu'alors présent (D2a) est l'un des signaux auxiliaires de données non exclu,
que pendant un intervalle d'adaptation, un signal auxiliaire de données non exclu, directement voisin du second signal de données (D2a) existant jusqu'alors, dans la phase, est sélectionné en tant que nouveau second signal de données (D2b), lorsque le signal de données présent jusqu'alors est l'un des signaux auxiliaires de données exclus,
que pour la formation d'un troisième signal de données (D3), le nouveau second signal de données (D2b) est adapté à la cadence (T) sélectionnée d'une manière quelconque à partir des cadences auxiliaires (HT1 à HT4).

2. Dispositif pour adapter continûment la phase d'un premier signal binaire de données (D1) à celle d'une cadence (T), dont la fréquence correspond à la cadence binaire de ce premier signal numérique (D1), comportant un générateur de cadences auxiliaires, qui produit n cadences auxiliaires (HT1 à HTn), qui possèdent la même fréquence que la cadence (T) et forment une suite avec des intervalles de phase égaux à 360°/n (n > 2), caractérisé par le fait
qu'il est prévu une partie de cadencement (I), dans laquelle les signaux auxiliaires de données (HD1 à HD4) sont obtenus au moyen d'une commande cadencée du premier signal de données (D1) à l'aide des cadences auxiliaires (HT1 à HT4),

7

qu'il est prévu un commutateur (III), qui transmet l'un des signaux auxiliaires de données (HD1 à HD4) en tant que second signal de données (D2),

qu'il est prévu une logique de commande (II), qui sélectionne l'un des signaux auxiliaires de données (HD1 à HD4) en tant que signal de données (D2) et règle de façon correspondante le commutateur (III), et

qu'il est prévu une partie d'adaptation (IV), dans laquelle un troisième signal de données (D3), dont la phase est adaptée, est obtenu à partir du second signal de données (D2) par commande cadencée avec la cadence (T).

3. Dispositif selon la revendication 2 pour m=1 et n=4,

caractérisé en ce

qu'il est prévu comme partie de cadencement (I), des première (7), seconde (8), troisième (9) et quatrième (10) bascules bistables de type D, dans lesquelles le premier signal de données (D1) est commandé de façon cadencée à partir respectivement d'une cadence auxiliaire (HT1 à HT4) de même numéro.

4. Dispositif selon les revendications 2 et 3 pour m=1 et n=4,

caractérisé par le fait

qu'il est prévu comme logique de commande (II) des première (11), seconde (12), troisième (13) et quatrième (14) portes NON-ET, dans lesquelles respectivement une première entrée est raccordée à la sortie $\overline{Q}$ de la bascule bistable de type D (7 à 10) de même numéro, respectivement une seconde entrée inverseuse est raccordée à une entrée de cadence auxiliaire (2 à 5) de même numéro et respectivement une troisième entrée est raccordée à une sortie Q de la bascule bistable de type D (7 à 10) possédant le numéro immédiatement suivant du point de vue cyclique, une première bascule bistable de type RS (15), dont l'entrée $\overline{S}$ est raccordée à la sortie de la première porte NON-OU (11), dont l'entrée $\overline{R}$ est raccordée à la sortie de la troisième porte NON-ET (13) et dont l'entrée de remise à l'état initial est raccordée à une entrée (6) du signal de remise à l'état initial, et une seconde bascule bistable de type RS (16), dont l'entrée $\overline{S}$ est raccordée à la sortie de la seconde porte NON-ET (12), dont l'entrée $\overline{R}$ est raccordée à la sortie de la quatrième porte NON-ET (14) et dont l'entrée de remise à l'état initial est raccordée à l'entrée (6) du signal de remise à l'état initial.

5. Dispositif selon les revendications 2 à 4 pour m=1 et n=4,

caractérisé par le fait

qu'il est prévu comme commutateur (III) un premier circuit de porte, constitué par une cinquième porte NON-ET (21), dont la première entrée est raccordée à la sortie Q de la seconde bascule bistable de type RS (16), dont la seconde entrée est raccordée à la sortie Q de la première bascule bistable de type D (7) et dont la troisième entrée est raccordée à la sortie $\overline{Q}$ de la première bascule bistable de type RS (15), par une sixième porte NON-ET (22), dont la première entrée est raccordée à la sortie $\overline{Q}$ de la première bascule bistable de type RS (15), dont la seconde entrée est raccordée à la sortie Q de la seconde bascule bistable de type D (8) et dont la troisième entrée est raccordée à la sortie $\overline{Q}$ de la seconde bascule bistable de type RS (16), et par une septième porte NON-ET (25), dont la première entrée est raccordée à la sortie de la cinquième porte NON-ET (25) et dont la seconde entrée est raccordée à la sortie de la sixième porte NON-ET (22), et un second circuit de porte, constitué par une huitième porte NON-ET (23), dont la première entrée est raccordée à la sortie $\overline{Q}$ de la seconde bascule bistable de type RS (16), dont la seconde entrée est raccordée à la sortie Q de la troisième bascule bistable de type D (9) et dont la troisième entrée est raccordée à la sortie Q de la première bascule bistable de type RS (15), par une neuvième porte NON-ET (24), dont la première entrée est raccordée à la sortie Q de la première bascule bistable de type RS (15), dont la seconde entrée est raccordée à la sortie Q de la quatrième bascule bistable de type D (10) et dont la troisième entrée est raccordée à la sortie Q de la seconde bascule bistable de type RS (16), et une dixième porte NON-ET (26), dont la première entrée est raccordée à la sortie de la huitième porte NON-ET (23) et dont la seconde entrée est raccordée à la sortie de la neuvième porte NON-ET (24).

6. Dispositif selon les revendications 2 à 5 pour m=1 et n=4,

caractérisé par le fait

qu'il est prévu comme partie d'adaptation (IV) une cinquième bascule bistable de type D (27), dont l'entrée D est raccordée à la sortie de la septième porte NON-ET (25), dont l'entrée de cadence est raccordée à la première entrée de cadence auxiliaire (2) et dont l'entrée de remise à l'état initial est raccordée à l'entrée (6) du signal de remise à l'état initial, une sixième bascule bistable de type D (28), dont l'entrée D est raccordée à la sortie de la dixième porte NON-ET (26), dont l'entrée de cadence est raccordée à la troisième entrée de cadence auxiliaire (4) et dont l'entrée de remise à l'état initial est raccordée à l'entrée (6) du signal de remise à l'état initial, une onzième porte NON-ET (29), dont la première entrée est raccordée à la sortie 'Q de la cinquième bascule bistable de type D (27) et dont la seconde entrée est raccordée à la sortie 'Q de la sixième bascule bistable de type D (28), et une septième bascule bistable de type D (30), dont l'entrée D est raccordée à la sortie de la onzième porte NON-ET (29), dont l'entrée de cadence est raccordée à la première entrée de cadence auxiliaire (2), dont l'entrée de remise à l'état initial est raccordée à l'entrée (6) du signal de remise à l'état initial et dont la sortie Q est racccordée à une sortie (31) pour le troisième signal de données (D3).

# FIG1

# FIG 2

EP 0 334 193 B1

# FIG 3

HT1
HT2
HT3
HT4

D1

A    B    C    D    E

HD3=D2

HD3=D2

HD4=D2

HD3=D2

HD4=D2

HD3=D2

HD4=D2

HD3=D2

# FIG 4

n=8
m=2

HD1

HD8        HD2

D2b5
D2b3

D2a3   HD7=HD$_{x+1}$        HD3  D2b4   D2b6

HD6=HD$_x$                 HD4=HD$_{x-2}$

D2a5        HD5=HD$_{x-1}$        D2a4

D2a6

10

# FIG 5

FIG 6

# FIG 7

EP 0 334 193 B1